# FASCICULE DE BREVET EUROPEEN

(11) **EP 3 188 032 B1**
(45) Date de publication et mention de la délivrance du brevet: **01.08.2018**
(21) Numéro de dépôt: 16161615.6
(22) Date de dépôt: 22.03.2016
(51) Int. Cl.: G06F 13/42

(54) **STOCKAGE DE DONNÉES DANS UNE MÉMOIRE FLASH**
DATENSPEICHERUNG IN EINEM FLASH-SPEICHER
STORAGE OF DATA IN A FLASH MEMORY

(30) Priorité: 28.12.2015 FR 1563377
(43) Date de publication de la demande: 05.07.2017
(73) Titulaire: PROTON WORLD INTERNATIONAL N.V., 1831 Diegem (BE)
(72) Inventeur: AHSSINI, Youssef, 1800 Vilvoorde (BE); RESTIAU, Guy, 1367 Ramillies (BE)
(74) Mandataire: Cabinet Beaumont

(56) Documents cités:
- EP-A1- 1 504 375
- US-A- 5 913 219

## Description

### Domaine

La présente description concerne de façon générale les circuits électroniques et, plus particulièrement, les circuits exploitant une mémoire flash. La présente description vise plus particulièrement la gestion du stockage de données dans une mémoire flash.

### Exposé de l'art antérieur

Les mémoires flash sont de plus en plus utilisées dans des microcontrôleurs pour stocker de façon non volatile des informations.

Le stockage de données dans une mémoire flash présente diverses contraintes temporelles liées à la granularité des opérations réalisées, l'écriture s'effectuant par octet tandis que la lecture et surtout l'effacement s'effectuent par page.

Dans certaines applications, on souhaite s'assurer que les transactions réalisées et stockées respectent un critère d'atomicité. L'atomicité d'une transaction correspond à s'assurer que des données stockées en mémoire présentent bien un état exploitable. Cela revient à s'assurer que des données en mémoire non volatile présentent soit l'état avant la transaction soit l'état après la transaction concernée mais qu'elles ne présentent pas un état intermédiaire.

La gestion de l'atomicité de transaction est particulièrement utilisée dans des applications où une interruption de l'alimentation du circuit ou l'apparition d'une perturbation accidentelle ou volontaire peut engendrer le stockage de données dans un état les rendant soit inexploitables par la suite soit vulnérables du point de vue de la confidentialité.

On connait de nombreuses techniques de gestion d'atomicité, plus particulièrement dans des microcontrôleurs appliqués à des transactions dites de sécurité, par exemple des transactions bancaires, de contrôle d'accès, etc. EP1504375A1 divulgue un système de stockage de données, permettant d'améliorer les performances de traitement des transactions.

### Résumé

Il serait souhaitable de disposer d'une solution de stockage de données dans une mémoire flash qui respecte le critère d'atomicité des données manipulées.

Il serait souhaitable de disposer d'une solution particulièrement adaptée à des transactions basées sur des communications sans contact.

Ainsi, un mode de réalisation prévoit un procédé de stockage de données dans une mémoire non volatile, lors d'une transaction hors ligne entre un circuit contenant ladite mémoire et un terminal, dans lequel :
une page de la mémoire est affectée à chaque transaction ;
les données de chaque transaction sont stockées de façon séquentielle dans la page correspondante ; et
la page affectée à une transaction est verrouillée en écriture à la fin de la transaction correspondante.

Selon un mode de réalisation, un compteur, également stocké en mémoire non volatile, est mis à jour à la fin de chaque transaction.

Selon un mode de réalisation, le compteur est un compteur du nombre de transactions.

Selon un mode de réalisation, un stockage de données d'une nouvelle transaction n'est autorisé que si le compteur n'a pas atteint un seuil correspondant au nombre de pages de la mémoire affectées aux transactions.

Un mode de réalisation prévoit un procédé de gestion d'une mémoire non volatile dans laquelle sont stockées des données par application du procédé, dans lequel, lors d'une communication entre ledit circuit et un serveur distant par l'intermédiaire d'un terminal :
les données contenues dans les pages sont lues et chargées dans le serveur distant ; et
les pages lues sont effacées.

Selon un mode de réalisation, le compteur est réinitialisé une fois toutes les pages traitées.

Un mode de réalisation prévoit une mémoire flash, programmée conformément au procédé ci-dessus.

Un mode de réalisation prévoit un circuit électronique comportant une mémoire flash.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est un schéma-bloc d'un exemple de circuit électronique du type auquel s'appliquent les modes de réalisation qui vont être décrits ; et
la figure 2 illustre, de façon très schématique et sous forme de blocs, un mode de mise oeuvre d'un procédé de gestion du stockage dans une mémoire flash du circuit de la figure 1.

### Description détaillée

De mêmes éléments ont été désignés par de mêmes références aux différentes figures.

Par souci de clarté, seuls les étapes et éléments utiles à la compréhension des modes de réalisation qui vont être décrits ont été représentés et seront détaillés. En particulier, le fonctionnement électrique d'une mémoire flash lors des étapes d'écriture, de lecture et d'effacement n'a pas été détaillé, les modes de réalisation décrits étant compatibles avec les technologies usuelles des mémoires flash. De plus, les applications utilisant une gestion d'atomicité n'ont pas non plus été détaillées, les modes de réalisation décrits étant, là encore, compatibles avec les applications usuelles.

Dans la description qui suit, lorsqu'on fait référence aux termes approximativement, environ et, de l'ordre de, cela signifie à 10% près, de préférence à 5% près.

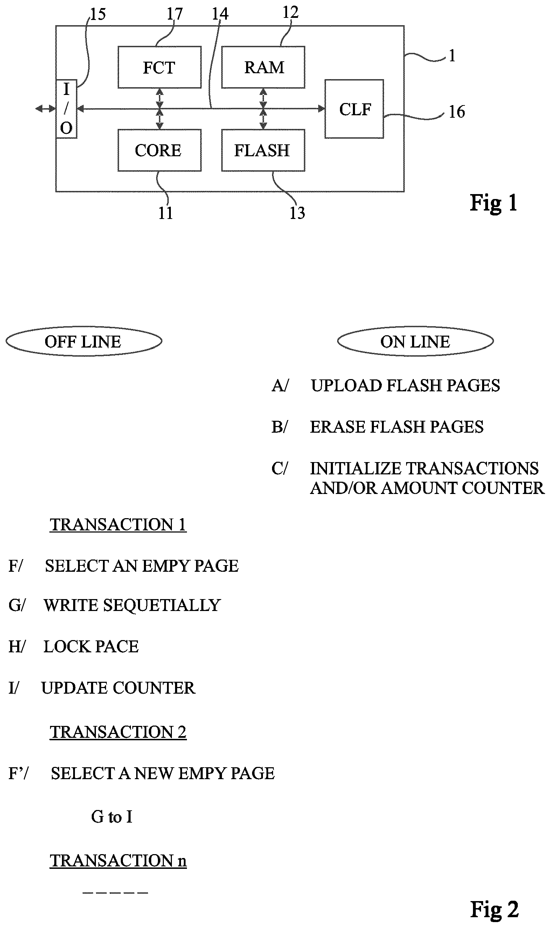

La figure 1 représente, de façon très schématique et sous forme de blocs, un mode de réalisation d'un circuit électronique 1 du type auquel s'appliquent, à titre d'exemple, les modes de réalisation qui vont être décrits.

Le circuit 1 comporte :
une unité de traitement 11 (CORE), par exemple une machine d'états, un microprocesseur, un circuit logique programmable, etc. ;
une ou plusieurs zones 12 (RAM) de stockage volatile, par exemple de type mémoire RAM ou registres, pour stocker temporairement des informations (instructions, adresses, données) pendant les traitements ;
une ou plusieurs zones 13 de stockage non volatile, dont au moins une mémoire de type flash (FLASH) pour stocker des informations de façon durable et en particulier quand le circuit n'est pas alimenté ;
un ou plusieurs bus 14 de données, d'adresses et/ou de commande entre les différents éléments internes au circuit 1 ; et
une interface d'entrée-sortie 15 (I/O) de communication, par exemple de type bus série, avec l'extérieur du circuit 1.

Dans les applications plus particulièrement visées par la présente description, le circuit 1 intègre également un circuit 16 de communication sans contact (CLF - ContactLess Front-end), de type communication en champ proche (Near Field Communication - NFC).

Par ailleurs, le circuit 1 peut intégrer d'autres fonctions, symbolisées par un bloc 17 (FCT), selon l'application, par exemple, un crypto-processeur, d'autres interfaces, d'autres mémoires, etc.

La gestion de l'atomicité des transactions dans un circuit équipé d'une mémoire flash est particulière car la mémoire flash présente une granularité de traitement par page et non par bit ou par octet, en particulier pour l'effacement. Une mémoire flash se programme, à partir d'un état initial vers des états 0 (états non conducteurs des cellules). Cela signifie que les cellules de la mémoire doivent être initialisées à un état haut et que, pour stocker une donnée, on choisit soit de ne pas intervenir sur l'état du bit, soit de programmer ce bit à 0. Un effacement (remise dans l'état initial haut) s'effectue forcément par page mémoire. Une page est définie comme la taille minimale susceptible d'être adressée simultanément pour effacement. Typiquement, une page représente actuellement, dans une mémoire flash, 32, 64, 128, 256 ou 512 octets. En pratique, cela correspond à la taille d'un registre recevant les données en série pour les transférer en parallèle au plan mémoire pour stockage.

Afin de garantir l'atomicité de transactions, le stockage en mémoire flash des données ne doit être effectué qu'une fois que la transaction est terminée et que les données sont dites stables. En pratique, les procédés de gestion d'atomicité activent un indicateur de traitement d'une donnée lorsque celle-ci est extraite de la mémoire non volatile, puis organisent le stockage de la donnée mise à jour, une fois le traitement terminé, l'indicateur de traitement changeant alors d'état. L'atomicité peut concerner une quantité plus ou moins importante de données (d'octets) selon la nature de la transaction.

Le caractère atomique des transactions est particulièrement important dans le cas de transactions de type bancaire (paiement par exemple) où il est nécessaire de s'assurer que l'information stockée dans la mémoire flash, par exemple le solde d'un porte-monnaie électronique ou d'une autorisation d'achat, ou l'identifiant validant une transaction, est stocké de façon fiable. Cela est critique pour des transactions réalisées hors ligne (off line), c'est-à-dire sans communication avec un serveur bancaire. En effet, pour des transactions effectuées hors ligne, les autorisations sont gérées par le circuit de paiement directement et on doit s'assurer que les transactions soient correctement stockées. Un exemple particulier concerne les transactions dites EMV (Eurocard, Mastercard, Visa).

Dans les applications sans contact, les transactions doivent être effectuées très rapidement en raison du caractère fugace de la communication qui est lié à la durée pendant laquelle le circuit 1 peut communiquer avec un terminal. Or, la gestion de l'atomicité des transactions prend du temps, de même que les opérations d'effacement qui sont nécessaires en mémoire flash pour autoriser une programmation.

La mémoire flash est plus particulièrement utilisée dans les transactions hors ligne afin de stocker les informations relatives à ces transactions jusqu'à ce que le circuit soit en ligne (avec ou sans contact) avec un serveur auquel sont destinées ces informations. Lorsque le circuit est dans une communication en ligne, les transactions sont télé-chargées dans le serveur et les zones correspondantes de la mémoire flash sont effacées. Ainsi, l'espace mémoire est de nouveau libéré pour stocker de nouvelles transactions hors ligne.

En particulier pour des applications EMV, le circuit contient un compteur du nombre de transactions hors ligne autorisées et/ou un compteur du montant maximal autorisé, qui est décrémenté au fur et à mesure que le montant est consommé hors ligne. Lors d'une connexion en ligne, le compteur du nombre de transactions est réinitialisé et le compteur du montant maximal est mis à jour à partir des informations du serveur bancaire.

Selon ce mode de réalisation, on prévoit, entre autres :
d'affecter une page de la mémoire flash à chaque transaction ;
d'écrire les données relatives à une transaction hors ligne séquentiellement dans la page affectée à cette transaction ;
de mémoriser la page utilisée à la fin de la transaction et d'interdire sa mise à jour hors ligne une fois la transaction terminée ; et
d'effacer les pages de la mémoire flash lors d'une transaction en ligne.

Ainsi, on s'interdit de procéder à des opérations d'effacement de la mémoire flash pendant les périodes où des transactions sont effectuées hors ligne et qui constituent des périodes critiques du point de vue temporel.

La figure 2 est un schéma-bloc illustrant un mode de mise en oeuvre d'un tel procédé de gestion du stockage en mémoire flash.

La figure 2 synthétise en partie gauche les opérations effectuées hors ligne et en partie droite celles effectuées en ligne.

A chaque fois que le circuit communique en ligne, que ce soit par contact (par exemple, l'introduction d'une carte bancaire dans un distributeur de billet) ou sans contact, les pages de la mémoire flash sont lues, c'est-à-dire que les pages de la mémoire flash sont téléchargés vers le serveur (A/ UPLOAD FLASH PAGES). Puis, les pages chargées sont effacées (B/ ERASE FLASH PAGES). Cette opération est relativement longue par rapport aux opérations de lecture et d'écriture mais elle n'est effectuée que lorsque le circuit communique en ligne, c'est-à-dire qu'il dispose de plus de temps. Enfin, lorsque toutes les pages ont été effacées, le terminal avec lequel le circuit 1 communique provoque la réinitialisation du compteur de transactions autorisées hors ligne et/ou du plafond de débit autorisé (C/ INITIALIZE TRANSACTIONS AND/OR AMOUNT COUNTER).

Le circuit 1 est alors prêt pour une nouvelle phase de transactions hors ligne. Pour ces transactions hors ligne, le circuit 1 (en pratique son unité de traitement 11 qui contrôle l'ensemble des opérations) sélectionne, à chaque nouvelle transaction (TRANSACTION 1, TRANSACTION 2, TRANSACTION n), une page vide de la mémoire flash (F/ SELECT AN EMPTY PAGE).

La transaction est alors opérée en mettant en oeuvre, de préférence, une gestion de l'atomicité de sorte que les informations qui sont stockées respectent le critère d'être soit l'état initial soit l'état final de la donnée concernée. N'importe quel algorithme d'atomicité peut être utilisé pourvu qu'il n'impose pas l'effacement de la mémoire 13 dans un fonctionnement hors ligne. Les données relatives à la transaction sont stockées séquentiellement dans la page (G/ WRITE SEQUENTIALLY), ce qui réduit les temps d'accès par rapport à un stockage non séquentiel.

Une fois la transaction terminée, la page est verrouillée (H/ LOCK PAGE) même si elle n'est pas pleine. En d'autres termes, l'espace résiduel éventuel dans la page ne peut pas être utilisé pour stocker, même partiellement, une autre transaction. Par ailleurs, le compteur du nombre de transactions et/ou le compteur du montant maximal est mis à jour (I/ UPDATE COUNTER), c'est-à-dire décrémenté ou incrémenté selon le seuil (valeur minimale ou valeur maximale) par rapport auquel s'effectue le contrôle.

Dans le cas d'un compteur du nombre de transactions, celui-ci est fonction du nombre de pages de la mémoire flash affectées aux transactions (par exemple entre 3 et 50).

Si ce nombre est atteint (ou si le seuil de montant est atteint), aucune nouvelle transaction hors ligne n'est autorisée et il faut une nouvelle connexion en ligne (étapes A à C) pour que le circuit puisse de nouveau fonctionner hors ligne.

Le mode de réalisation décrit tire profit de la différence de durée entre le temps de programmation et le temps d'effacement. En pratique, dans une mémoire flash, l'opération d'effacement d'une page est relativement longue (typiquement de l'ordre de quelques millisecondes) par rapport à une opération de programmation d'un octet (typiquement de l'ordre de la dizaine de microsecondes).

On tire également profit du fait qu'une mémoire flash s'écrit par octet, ce qui rend compatible le traitement d'une transaction par écriture séquentielle dans la mémoire flash en respectant un caractère atomique des transactions. Le fait que la lecture s'effectue, dans une mémoire flash, par page entière n'est pas préjudiciable car cette lecture s'effectue en ligne.

Le choix de la taille des pages dépend de l'application et de la taille maximale nécessaire pour stocker une transaction.

Un avantage des modes de réalisation qui ont été décrits est qu'ils améliorent la gestion d'une mémoire flash dans des transactions hors ligne entre un circuit intégrant une mémoire flash et un terminal.

Un autre avantage est une compatibilité avec des transactions bancaire, par exemple de type EMV.

Un autre avantage des modes de réalisation décrits est qu'ils ne nuisent pas à l'atomicité de l'écriture d'une transaction dans la mémoire.

Divers modes de réalisation ont été décrits. Diverses variantes et modifications apparaîtront à l'homme de l'art. En particulier, bien que les modes de réalisation aient été plus particulièrement décrits en relation avec un exemple d'application à des transactions de type EMV et à une mémoire flash, ils se transposent à d'autres applications et mémoires dans lesquelles des problèmes similaires se posent. Par ailleurs, la mise en oeuvre pratique des modes de réalisation qui ont été décrits est à la portée de l'homme du métier à partir des indications fonctionnelles données ci-dessus et en utilisant des circuits en eux-mêmes usuels. Notamment, l'organisation de l'adressage de la mémoire et la génération des signaux adaptés à sa commande et à cet adressage font appel à des techniques en elles-mêmes usuelles.

## Revendications

1. Procédé de stockage de données dans une mémoire non volatile (13), lors d'une transaction hors ligne entre un circuit contenant ladite mémoire et un terminal, dans lequel :
une page de la mémoire, correspondant à la taille minimale susceptible d'être adressée simultanément pour effacement, est affectée à chaque transaction ;
les données de chaque transaction sont stockées de façon séquentielle dans la page correspondante ; et
la page affectée à une transaction est verrouillée en écriture à la fin de la transaction correspondante.

2. Procédé selon la revendication 1, dans lequel un compteur, également stocké en mémoire non volatile, est mis à jour à la fin de chaque transaction.

3. Procédé selon la revendication 2, dans lequel le compteur est un compteur du nombre de transactions.

4. Procédé selon la revendication 3, dans lequel un stockage de données d'une nouvelle transaction n'est autorisé que si le compteur n'a pas atteint un seuil correspondant au nombre de pages de la mémoire affectées aux transactions.

5. Procédé de gestion d'une mémoire non volatile dans laquelle sont stockées des données par application du procédé selon l'une quelconque des revendications 1 à 4, dans lequel, lors d'une communication entre ledit circuit et un serveur distant par l'intermédiaire d'un terminal :
les données contenues dans les pages sont lues et chargées dans le serveur distant ; et
les pages lues sont effacées.

6. Procédé selon la revendication 5, dans son rattachement à l'une quelconque des revendications 2 à 4, dans lequel le compteur est réinitialisé une fois toutes les pages traitées.

7. Mémoire flash, programmée conformément au procédé selon l'une quelconque des revendications 1 à 6.

8. Circuit électronique comportant une mémoire flash (13) conforme à la revendication 7.

## Patentansprüche

1. Ein Verfahren zur Datenspeicherung in einem nicht-flüchtigen Speicher (13) während einer Off-line- Transaktion zwischen einer den erwähnten Speicher enthaltenden Schaltung und einem Anschluss, wobei:
eine Seite des Speichers jeder Transaktion zugeordnet ist, eine Seite entsprechend der minimalen Größe die, zum Löschen, gleichzeitig adressiert werden könnte;
die Daten jeder Transaktion sequentiell auf der entsprechenden Seite gespeichert sind; und
die einer Transaktion zugeordnete Seite in Schreibbetriebsart am Ende der entsprechenden Transaktion festgelegt ist.

2. Das Verfahren nach Anspruch 1, wobei ein Zähler, ebenfalls gespeichert in einem nicht-flüchtigen Speicher am Ende jeder Transaktion auf den neuesten Stand gebracht wird (updated).

3. Das Verfahren nach Anspruch 2, wobei der Zähler ein Zähler der Anzahl der Transaktionen ist.

4. Das Verfahren nach Anspruch 3, wobei ein Speicher der Daten einer neuen Transaktion nur zugelassen ist, wenn der Zähler nicht eine Schwelle erreicht hat entsprechend der Anzahl der Seiten eines Speichers zugewiesen zu den Transaktionen.

5. Ein Verfahren zum Betreiben eines nicht-flüchtigen Speichers, der Daten darinnen gespeichert aufweist, und zwar durch Anwenden des Verfahrens nach irgendeinem der Ansprüche 1 bis 4, wobei während einer Kommunikation zwischen der erwähnten Schaltung und einem entfernt gelegenen Server über einen Anschluss folgendes vorgesehen ist:
die in den Seiten enthaltenen Daten werden gelesen und in den entfernt gelegenen Server geladen; und
die gelesenen Seiten werden gelöscht.

6. Das Verfahren nach Anspruch 5 und einem der Ansprüche 2 bis 4, wobei der Zähler zurückgesetzt wird, sobald alle Seiten bearbeitet sind.

7. Ein Flashspeicher programmiert entsprechend dem Verfahren irgendeines der Ansprüche 1 bis 6.

8. Eine elektronische Schaltung, die den Flashspeicher (13) nach Anspruch 7 aufweist.

## Claims

1. A method of data storage in a non-volatile memory (13), during an off-line transaction between a circuit containing said memory and a terminal, wherein:
a page of the memory, corresponding to the minimal size capable of being simultaneously addressed to be erased, is assigned to each transaction;
the data of each transaction are stored sequentially in the corresponding page; and
the page assigned to a transaction is locked in write mode at the end of the corresponding transaction.

2. The method of claim 1, wherein a counter, also stored in a non-volatile memory, is updated at the end of each transaction.

3. The method of claim 2, wherein the counter is a counter of the number of transactions.

4. The method of claim 3, wherein a storage of data of a new transaction is only allowed if the counter has not reached a threshold corresponding to the number of pages of the memory assigned to transactions.

5. A method of managing a non-volatile memory having data stored therein by application of the method of any of claims 1 to 4, wherein, during a communication between said circuit and a distant server via a terminal:
the data contained in the pages are read and loaded into the distant server; and
the read pages are erased.

6. The method of claim 5, and of any of claims 2 to 4, wherein the counter is reset once all pages have been processed.

7. A flash memory, programmed according to the method of any of claims 1 to 6.

8. An electronic circuit comprising the flash memory (13) of claim 7.
